Europäisches Patentamt

European Patent Office

Office européen des brevets

(11) Veröffentlichungsnummer: **0 362 242 B1**

(12) **EUROPÄISCHE PATENTSCHRIFT**

(45) Veröffentlichungstag der Patentschrift: **18.11.93**

(21) Anmeldenummer: **88904506.8**

(22) Anmeldetag: **07.05.88**

(86) Internationale Anmeldenummer:
**PCT/EP88/00394**

(87) Internationale Veröffentlichungsnummer:
**WO 88/08906 (17.11.88 88/25)**

(51) Int. Cl.⁵: **E04B 1/74**, E04B 1/76

(54) **FASSADENBEKLEIDUNG.**

(30) Priorität: **07.05.87 DE 3715220**

(43) Veröffentlichungstag der Anmeldung:
**11.04.90 Patentblatt 90/15**

(45) Bekanntmachung des Hinweises auf die
Patenterteilung:
**18.11.93 Patentblatt 93/46**

(84) Benannte Vertragsstaaten:
**AT BE CH DE FR GB IT LI LU NL SE**

(56) Entgegenhaltungen:
**DE-A- 3 230 639**
**DE-A- 3 309 033**
**DE-A- 3 435 613**
**US-A- 3 049 459**
**US-A- 4 324 231**

(73) Patentinhaber: **Grünzweig + Hartmann AG**
**Bürgermeister-Grünzweig-Strasse 1**
**D-67059 Ludwigshafen(DE)**

(72) Erfinder: **TIESLER, Hartmut**
**Frankenstr. 3**
**D-6719 Bockenheim(DE)**
Erfinder: **ROYAR, Jürgen**
**Jahnstra e 3**
**D-6802 Ladenburg(DE)**
Erfinder: **BOY, Elmar**
**Pfeilstr. 26a**
**D-7000 Stuttgart 80(DE)**

(74) Vertreter: **KUHNEN, WACKER & PARTNER**
**Alois-Steinecker-Strasse 22**
**D-85354 Freising (DE)**

EP 0 362 242 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 362 242 B1

**Beschreibung**

Die Erfindung betrifft eine Fassadenbekleidung nach dem Oberbegriff des Anspruchs 1.

Es ist bereits bekannt, an einer Gebäudeaußenwand in einem Abstand eine parallele Glasscheibe zu befestigen, um die Sonneneinstrahlung, die durch die Glasscheibe hindurchtritt und auf der Wandaußenseite auftrifft, dort in Wärme umzuwandeln. Die erzeugte Wärme wird durch Luft abtransportiert, die zwischen der Glasscheibe und der Wand strömt, und/oder in die Wand eingespeichert. Allerdings findet hier eine nicht unbeachtliche Wärmeableitung durch die Glasscheibe nach außen statt, so daß bei verminderter oder fehlender Sonneneinstrahlung, insbesondere nachts, erhebliche Wärmeverluste zu verzeichnen sind.

Es ist von daher bereits in der DE-A-3 309 033 eine Fassadenbekleidung vorgeschlagen worden, die eine auf einer Außenwand eines Gebäudes anbringbare Dämmschicht mit einer auf der Außenseite dem Witterungsschutz dienenden Außenbekleidung umfaßt. Die Außenbekleidung ist lichtdurchlässig. Zusätzlich wird eine absorbierende Fläche benötigt, die vor allem und in der Regel aus der Außenfläche der Gebäudewand gebildet ist. Die Materialschicht läßt nach dieser vorbekannten Fassadenbekleidung die Sonnenstrahlen bis zur Absorptionsfläche hindurchtreten und soll in umgekehrter Richtung die Wärmeabgabe an die Außenumgebung verringern. Die Materialschicht muß dazu eine hohe Lichtdurchlässigkeit aufweisen. Als lichtdurchlässige Materialien für die Dämmschicht kommen hier beispielsweise Silikat- oder Acrylglas, insbesondere Preßglas in Betracht.

Zwar kann nach der erwähnten Offenlegungsschrift die Absorptionsfläche auch innerhalb der Dämmaterialschicht an Vorsprüngen angeordnet sein, um eine verbesserte Wärmeabgabe an ein entlang der Absorbtionsfläche strömendes Wärmeübertragungsfluid zu erreichen, mit dem Überschußwärme zu einem Wärmeverbraucher abgeführt wird. In jedem Falle aber liegt die Absorptionsfläche hinter dem Dämmmaterial.

Gegenüber herkömmlichen Fassadenbekleidungen mit einer opaken Außenbekleidung, durch die keine Solarstrahlung in die nachfolgende Dämmschicht hindurchdringen kann, weist die Fassadenbekleidung gemäß der erwähnten DE-A-3 309 033 zumindest den Vorteil auf, daß die Solarstrahlung erheblich besser ausgenutzt wird und ein Wärmetransport durch die Gebäudewand hindurch stattfindet. Als nachteilig muß aber festgehalten werden, daß vor allem zwischen Frühjahr und Herbst und insbesondere im Hochsommer der durch die Dämmschicht und die Gebäudeaußenwand in das Gebäude eindringende Wärmetransport derart hoch ist, daß die erwähnte Fassadenbekleidung ohne aufwendige Maßnahmen zur Wärmeabfuhr oder einen zusätzlichen Sonnenschutz bei starker Solarstrahlung aufgrund der unerwünscht hohen Aufwärmung in dem Gebäudeinneren nicht verwandt werden kann. Durch Sonnenschutzmaßnahmen wird überdies die nutzbare Gesamtsolarenergie begrenzt, da insbesondere bei wärmedämmendem Mauerwerk lokale Überhitzungen durch Sonnenschutzmaßnahmen bereits dann verhindert werden müssen, wenn ein Beitrag der Sonne zum Energiehaushalt noch wünschenswert wäre.

Infolge des Aufwands für Kühl- bzw. Sonnenschutzmaßnahmen konnten sich sämtliche Konzepte zur fassadenseitigen Nutzung der Sonnenenergie in der Praxis nicht durchsetzen.

Aufgabe der vorliegenden Erfindung ist es von daher, Nachteile des Standes der Technik zu vermeiden und eine Fassadenbekleidung zu schaffen, die unter Nutzung der Sonnenenergie eine optimale Wärmedämmung vor allem auch bei niedrigen Außentemperaturen, insbesondere in den Wintermonaten und in der Übergangszeit aufweist, ohne daß in den Sommermonaten ein unerträglich hoher Wärmetransport in das Gebäudeinnere aufwendige Kühlmaßnahmen erfordert. Die Fassadenbekleidung soll daher möglichst einfach und kostengünstig aufgebaut sein und ohne zusätzliche Kühl- bzw. Sonnenschutzmaßnahmen insbesondere für die Sommermonate auskommen.

Die Erfindung wird entsprechend den im kennzeichnenden Teil des Anspruches 1 angegebenen Merkmalen gelöst. Vorteilhafte Ausgestaltungen der Erfindung im Sinne der Aufgabenstellung sind in den Unteransprüchen angegeben.

Durch die vorliegende Erfindung wird auf verblüffende und überraschende Art und Weise erstmals erreicht, daß einerseits einfallende Sonnenstrahlung zur Verbesserung der Energiebilanz des Gebäudes genutzt wird und bei fehlender Sonneneinstrahlung eine gute Wärmedämmung eine Auskühlung verhindert, ohne daß aber andererseits eine zu starke Gebäudeaufheizung in den Sommermonaten durch aufwendige Kühl- bzw. Sonnenschutzmaßnahmen verhindert werden muß. Die durch die transparente Außenbekleidung in die nachfolgende Dämmschicht einfallende Solarstrahlung wird längs des Eindringweges im Dämmstoff so absorbiert, daß das Temperaturprofil in der Dämmschicht zunächst bis zu einem maximalen Wert ansteigt und dann zur Gebäudeaußenwand wieder abfällt. Durch die naturgemäß niedrige Wärmeleitfähigkeit der Dämmschicht können sich bei Sonneneinfall hohe Temperaturen einstellen, die auch bei niedrigen Außentemperaturen durch einen Gegenheizungseffekt einen Wärmeabfluß von innen nach außen blockieren. Zusätzlich kann auch bei der erfindungsgemäßen Lösung Wärme aus der Dämmschicht in die dahinterliegende innere Wandschale eingeleitet werden. Als besonders günstig erweist sich aber vor allem, daß auch bei hohen Außentemperaturen bei starker Solareinstrahlung keine weiteren Kühl- oder Sonnenschutzmaßnahmen erforderlich sind, um einen zu starken Wärmetransport in die Gebäudeaußenwand zu verhindern. Erfindungsgemäß wird dies insbesondere dadurch ermöglicht, daß das Temperaturmaximum im Inneren der Wärmedämmschicht liegt und zur Gebäudeaußenwand wiederum abfällt.

Als besonders wesentlich kann festgehalten werden, daß im Gegensatz zu dem eingangs an zweiter Stelle abgehandelten Stand der Technik keine transparenten, sondern nur opake, allenfalls noch transluzente Dämmstoffe verwandt werden.

Das gewünschte erfindungsgemäße Temperaturprofil wird in einer Weiterbildung durch Verwendung von Stoffen mit entsprechender struktur- und/oder materialbedingten Porosität, insbesondere von Mineralfaser-Dämmstoffen, erzielt.

Die Außenbekleidung kann ebenfalls aus einer transluzenten milchglasähnlichen Schicht oder mehreren entsprechenden Schichten bestehen, die direkt oder im Abstand auf der Dämmschicht aufliegen.

Weitere Vorteile, Einzelheiten und Merkmale der Erfindung ergeben sich nachfolgend aus den anhand von Zeichnungen näher erläuterten Ausführungsbeispielen der Erfindung.

Es zeigt

| | |
|---|---|
| Fig. 1 | eine Querschnittdarstellung durch eine erste erfindungsgemäße Fassadenbekleidung (II), |
| Fig. 2 | eine Querschnittsdarstellung durch eine zweite erfindungsgemäße Fassadenbekleidung (III), |
| Fig. 3 | verschiedene Temperaturprofile bei Verwendung unterschiedlicher Materialien im Vergleich zu bekannten Lösungen; |
| Fig. 4 | ein Funktionsschema für die Ausnützung des einfallenden solaren Strahlungsspektrums und den stattfindenden Wärmetransport durch die Gebäudeaußenwand bei einer herkömmlichen bekannten Fassadenbekleidung (I) mit einer opaken Außenschicht; |
| Fig. 5 | ein Funktionsschema für die Ausnützung des einfallenden solaren Strahlungsspektrums und den stattfindenden Wärmetransport durch die Gebäudeaußenwand bei einer herkömmlichen bekannten Fassadenbekleidung (IV) mit einer transparenten Außenbekleidung und einer tranparenten Dämmschicht; |
| Fig. 6 | ein Funktionsschema für die Ausnützung des einfallenden solaren Strahlungsspektrums und den Stattfindenden Wärmetransport durch die Gebäudeaußenwand bei einer erfindungsgemäßen Fassadenbekleidung; |
| Fig. 7 | ein Diagramm zur Darstellung der effektiven k-Werte der unterschiedlich gedämmten Fassadenbekleidungen in Abhängigkeit von der gradtagspezifischen Einstrahlung für zwei erfindungsgemäße Fassadenbekleidungen im Gegensatz zu zwei unterschiedlichen vorbekannten Fassadenbekleidungen; |
| Fig. 8 und 9 | zwei weitere erfindungsgemäße Ausführungsformen in einer Darstellung entsprechend Fig. 1 und 2, |
| Fig. 10 | ein Diagramm zur Veranschaulichung der maximalen Dämmstofftemperaturen bei unterschiedlicher Strahlungsintensitäten in verschiedenen Mineralfaser-Dämmstoffen, und |
| Fig. 11 | einen Satz von Diagrammen zur Veranschaulichung des thermischen und energetischen Verhaltens einer erfindungsgemäßen Fassadenbekleidung. |

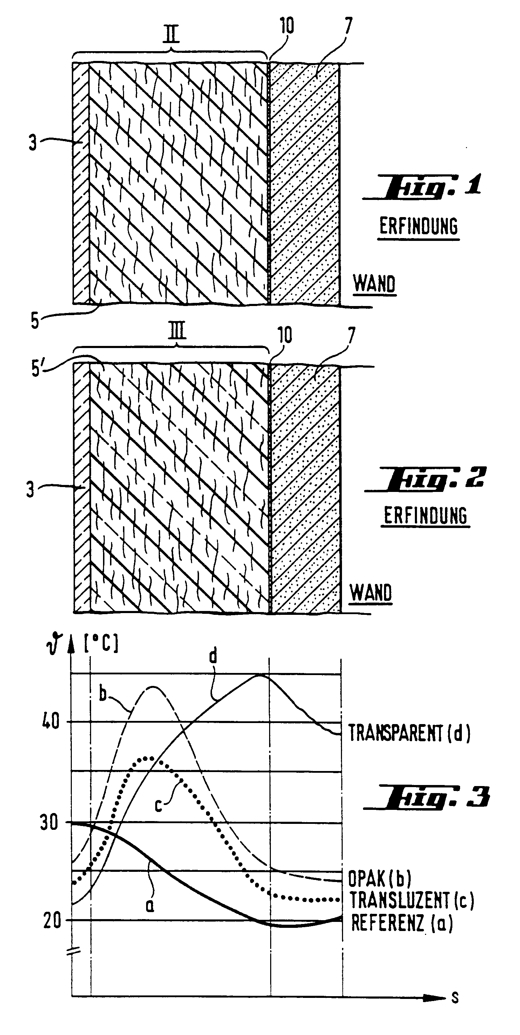

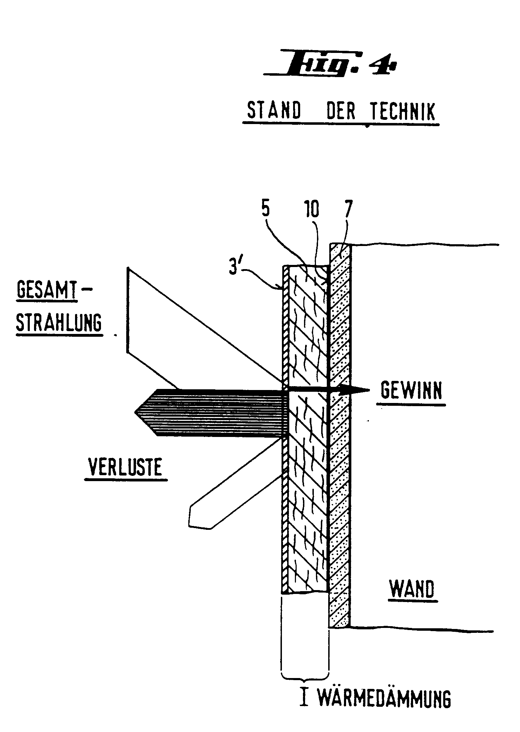

In Fig. 1 ist eine Fassadenbekleidung II mit einer transparenten Außenabdeckung 3 und einer angrenzenden opaken (gelben) Dämmschicht 5 gezeigt, wobei die Fassadenbekleidung II direkt an einer Außenwand eines Gebäudes angebracht sein kann. Hier in diesen Meßbeispielen sind alle Fassadenbekleidungen mit scharzem Klebstoff 10 an 20 mm starke Asbestzementplatten 7 aufgeklebt.

Die Außenabdeckung 3 dient als Witterungsschutz. Sie ist transparent bzw. transluzent und kann in Scheibenform aus Silikatglas oder Kunstglas oder sonstigen beliebigen transparenten Schichten bestehen. Es sind einlagige oder mehrlagige Schichten möglich, die direkt auf der Dämmschicht 5 aufliegen oder in einem Abstand mit Luftspalt montiert werden. Die Scheiben können zusätzlich mit IR-wirksamen Beschichtungen versehen oder beliebig eingefärbt oder oberflächenstrukturiert sein.

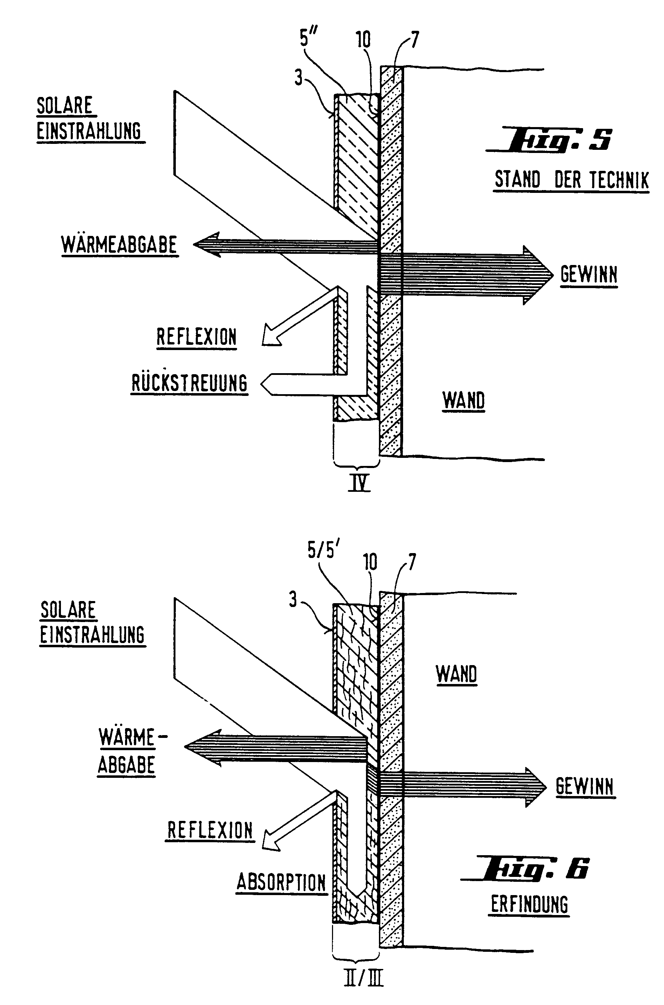

Die Fassadenbekleidung III nach Fig. 2 besteht aus einer transparenten Außenabdeckung 3 und einer transluzenten (hochweißen) Dämmschicht 5'.

Die Außenabdeckung 3 kann aber auch in Folienform aus beliebigen witterungsbeständigen, transparenten oder transluzenten Kunststoff-Folien oder Textilgeweben bestehen, vorzugsweise mit einem exponentiellen Absorptionsgrad $\alpha_e < 0,06$, so daß jedenfalls der überwiegende Teil der auftreffenden Solarstrahlung transmittiert wird.

Ebenso in Frage kommen transparente oder transluzente Farbanstriche, Putze oder sonstige Materialauftragungen, die der dahinter liegenden Dämmschicht durch Aushärten oder Verkleben u. a. einer äußeren Materialschicht den erforderlichen Witterungs und Verwitterungsschutz verleihen.

Die Dämmschicht 5 weist eine struktur- oder materialbedingte Konsistenz mit einem exponentiellen Absorptionsgrad der äußeren Oberflächenschicht von $\alpha_e > 0,15$ und mit einem exponentiellen Strahlungstransmissionsgrad für das solare Strahlungsspektrum von $\tau_e < 10\ \%$ auf. Als geeignete Materialien kommen hierfürein Frage:

- anorganische Fasermaterialien wie beispielsweise Glasfaser-, Steinfaserdämmplatten etc.;
- organische Fasermaterialien, wie z.B. Kokosfasern, Flachs, Holzspäne usw.;
- Poren- oder Schaummaterialien verschiedener Grund- oder Ausgangsmaterialien organischer oder anorganischer Herkunft.

Auch die Dämmschicht 5 kann an ihrer außenseitigen Oberfläche beliebig eingefärbt seine, mit verschiedenen Farbtönen gemustert oder mit Motivbildern versehen werden. Sie kann monolitisch oder im Schichtaufbau inhomogen aus transparenten und opaken Teilschichten aufgebaut werden. In die Dämmschicht können Massen oder speicherfähige Einlagen oder Schichten integriert sein.

In der in Fig. 1 gezeigten Fassadenbekleidung (II) kann die Außenabdeckung 3 auf der Dämmschicht 5 je nach Ausführungsform durch Verkleben, Auftragen, Verschrauben oder in Verbindung mit Hilfkonstruktionen wie Rahmenmontagesystem ausgebracht und damit verbunden werden. Bei Ausführungen mit Scheiben sind ebenso in Hilfskonstruktionen eingehängte Ausführungen mit groß- oder kleinformatigen Einzelelementen möglich.

Die Außenabdeckung 3 selbst kann - da nur eine im Prinzip transparente oder transluzente Schutzschicht wünschenswert ist - beliebig dünn sein. Bei bestimmten Materialien könnte unter Umständen ganz auf die Außenabdeckung 3 verzichtet werden. Die Dicke der Dämmschicht ist aufwendungs-, material- und klimaabhängig. Ihre Dimensionierung erfolgt im wesentlichen nach den folgenden Kriterien:

- Vermeidung von materialzerstörender Überhitzung,
- Vermeidung der Erfordernis von Sonnenschutzeinrichtungen,
- energetische Optimierung, d.h. klimaabhängige Transmissionswärmeverlustminderung.

Im praktischen Einsatzfall haben sich Dicken von weniger als 100 mm bzw. 70 mm als voll ausreichend erwiesen. Häufig sind sogar Dicken von 50 mm und weniger, beispielsweise 40 mm, voll ausreichend, wie weiter unten noch näher veranschaulicht wird.

Nachfolgend werden zwei erfindungsgemäße mit zwei herkömmlichen bekannten Fassadenbekleidungen im Rahmen eines an einer südorientierten Wand durchgeführten Tests verglichen.

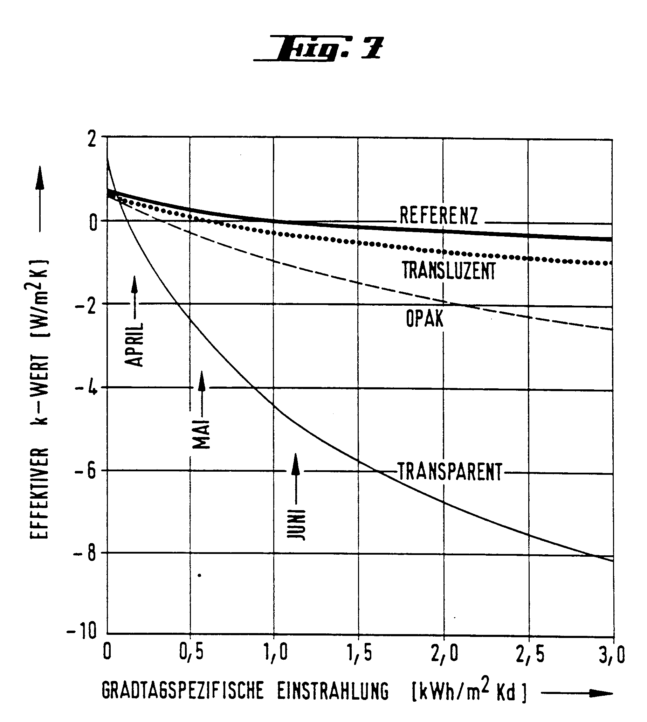

In Tabelle 1 und Fig. 3 (Kurven a, b, c und d) sind dabei die Ausführungsmerkmale von vier verschiedenen Dämmschichten angegeben. Als "Referenz" (Kurve a) dient eine Variante mit opaker Aluminiumaußenbekleidung und opaker Dämmschicht. Es wird daran erinnert, daß als "opake Schicht" eine solche Schicht definiert ist, die bei der gegebenen Schichtdicke wenigstens 99,99 % der auftreffenden Strahlung absorbiert oder zurückstreut, und deren Schichtdicke damit über der Opazitätsschichtdicke liegt.

Die gleiche Dämmschicht, nämlich ein opaker gelber Mineralfaserfilz wird auch für die erste erfindungsgemäße Fassadenbekleidung II, die mit "opak" bzw. Kurve b in der Fig. 1 und in den Tabellen bezeichnet ist, verwandt.

Als zweites Ausführungsbeispiel für die erfindungsgemäße Fassadenbekleidung III (Fig. 2) wird ein transluzenter (Kurve c) weißer Filz als Dämmaterial 5' verwandt. Die Bezeichnung mit "transluzent" wird deshalb gewählt, da das aus weißem Filz bestehende Material bei der gewählten Dicke in der Betrachtung gegen Licht noch leicht durchschimmernd wirkt. Sowohl bei cem mit "opak" als auch bei dem als "transluzent" bezeichneten Ausführungsbeispiel zweier erfindungsgemäßer Fassadenbekleidungen (II + III) ist eine transparente Außenabdeckung verwandt worden.

In Fig. 3 und den Tabellen wird noch eine vierte Fassadenbekleidung IV getestet, die mit "transparent" gekennzeichnet ist (Kurve d). Dies deshalb, da bei diesem vorbekannten Ausführungsbeispiel einer Fassadenbekleidung IV nicht nur die Außenabdeckung 3, sondern auch die Dämmschicht 5'' aus transparentem Material besteht.

Die Stoffwerte der Versuchsaufbauten sind in Tabelle 1 aufgelistet. Bei allen vier Versuchselementen beträgt die Dämmschichtdicke 50 mm. Die Wärmeleitfähigkeit beträgt beim opaken gelben Filz 0,04 W/mK, beim transluzenten weißen Filz 0,03 W/mK und beim transparenten Dämmaterial 0,08 W/mK. Für die Rohdichten des gelben, weißen und transparenten Filzes wurden 14, 12,5 und 4,7 $kg/m^3$ gewählt.

Alle vier Dämmschichten I, II, III und IV sind mit dem schwarzen Klebstoff 10 auf 20 mm dicke Asbestzementplatten 7 aufgeklebt. Die Außenabdeckung 3 liegt jeweils auf der Dämmschicht 5 auf und wird durch einen Trägerrahmen gehalten.

Zur Durchführung der Temperaturmessungen sind in mehreren diskreten Abständen an den Außenflächen der jeweiligen Schichten wie auch im Inneren vor allem der Dämmschicht 5 mehrere Temperaturfühler installiert. Zusätzliche Meßfühler erfassen die Temperaturen der beiderseits der Wandkonstruktion angrenzenden Luft, die Oberflächentemperaturen aller Schichten der Wandkonstruktion, die Wärmestromdichte an der raumseitigen Wandoberfläche und die in Wandebenen außen auftreffende Solarstrahlung.

Die Messung erfolgt in einer viermonatigen Untersuchungsperiode von April bis Juli unter natürlichem Außenklima. Auf der Wandinnenseite wurde die Luft auf einen konstanten Wert von 20°C temperiert. Tabelle 2 enthält Monatsmittelwerte der klimatischen Randbedingungen. Wie Untersuchungen bei Schreiber, E.; Boy, E.; Bertsch, K.: "Heinzenergieeinsparung durch Wände mit transparenten Wärmedämmschichten - Rechenergebnisse unter idealisierten Innenrandbedingungen -" IBP-Bericht SA 4/85, Stuttgart 1985 zeigen, ist die gradtagspezifische Einstrahlung, die sowohl die Temperaturdifferenz der Luft zwischen innen und außen als auch die solare Einstrahlung berücksichtigt, eine Klimakenngröße zur Beurteilung der Effizienz der Dämmschicht. Im Untersuchungszeitraum lagen die Außenlufttemperaturen zwischen -6,4°C und 36,3°C. Damit geben die Messungen Aufschluß über das winterliche und das sommerliche Verhalten der Dämmschichten. Die Monatsmittelwerte der Außenlufttemperatur bewegten sich zwischen 7,9°C und 19,3°C. An der vertikalen Südwand wurden im Stundenmittel maximale Strahlungsintensitäten von 793 $W/m^2$ im April ermittelt. In den Sommermonaten gehen die Maxima an der Südfläche infolge der Sonnenbahn auf ca. 620 $W/m^2$ zurück. Allerdings nehmen die jeweiligen mittleren Strahlungsintensitäten zum Sommer hin von 72 $W/m^2$ auf 101 $W/m^2$ zu. Die mittleren Tagessummen der Gesamtstrahlung auf die Südfläche liegen im April bei 1,73 $kWh/m^2$. Sie steigen bis zum Juli auf 2,43 $kWh/m^2$ an.

Das sich bei Sonneneinstrahlung in den verschiedenen Wandaufbauten einstellende Temperaturprofil ist in Fig. 3 dargestellt. Bei transparenter Außenbekleidung liegen die Außenoberflächentemperaturen niedriger als bei der Referenzwand mit opaker Außenbekleidung Am niedrigsten ist der Wert im transparent gedämmten Feld. Beim "opaken" und "transluzenten" Versuchsfeld kann die durch die transparente Außenbekleidung transmittierte Solarstrahlung durch die poröse Struktur in die Dämmschicht eindringen. Längs des Eindringweges findet in der Dämmschicht eine Strahlungsabsorption statt, wobei bei Materialien mit gleichwertigem Aufbau wie beispielsweise Faserdämmstoffen der Absorptionsgrad längs des Strahlungsweges konstant ist.

Ferner beträgt die Absorption des solaren Strahlungsspektrums an der Außenbekleidung der Fassadenbekleidung weniger als 6 %, vorzugsweise weniger als 4 %. In der Dämmschicht soll bei dem Versuchsbeispiel "transluzent" bzw. "opak" die Absorption im solaren Strahlungsspektrum hinter der transparenten oder transluzenten Außenbekleidung mehr als 15 %, vorzugsweise mehr als 20 % der auf die Oberfläche der Dämmschicht auftreffenden Strahlungsenergie betragen. Die Strahlungstransmissionswerte im solaren Strahlungsspektrum betragen bei den bevorzugt für die Dämmschicht zu verwendenden Materialien weniger als 10 %, vorzugsweise weniger als 8 %.

Bei einer ganz lichtundurchlässigen Dämmschicht beträgt der Transmissionsgrad $\tau$ null, bei einer Schichtdicke oberhalb der Opazitätsschichtdicke jedenfalls weniger als 0,01 %, oder 0,0001; in diesem Fall wird die gesamte oder fast die gesamte einfallende Strahlungsenergie entweder zurückgestreut oder absorbiert, wobei in der Praxis stets beide Phänomene gleichzeitig auftreten. In jedem Fall steht an der Rückseite der Dämmschicht keine nennenswerte transmittierte Strahlungsenergie für eine Absorption an der Außenfläche der Mauerwand zur Verfügung. Zur Erzielung der erfindungsgemäßen Wirkungen braucht der Dämmstoff jedoch nicht unbedingt opak zu sein, sondern er kann auch transluzent sein, solange - wie dies bei transparenter Ausbildung nicht der Fall wäre - sichergestellt ist, daß bei Energieeintrag durch nutzbare Sonneneinstrahlung das Maximum der Temperatur infolge dortiger Absorption in der Dämmschicht liegt, und nicht etwa an der Oberfläche der zu dämmenden Wand, wenn diese eine hohe von der Dämmschicht transmittierte Strahlungsenergie absorbieren kann.

Wenn nun der Anteil der von der Dämmschicht reflektierten oder zurückgestreuten Strahlung hoch und der absorbierte Anteil gering ist, so muß auch die transmittierte Strahlung sehr gering gehalten werden, um einen gegenüber der Innentemperatur des Dämmstoffs zu großen Temperaturanstieg an der Außenseite der Wand durch dortige Absorption zu vermeiden. Ist hingegen der Absorptionsgrad $\alpha$ im Dämmaterial gegenuber den Rückstreuverlusten sehr hoch, so kann auch etwas erhöhte Transmission zugelassen werden, da diese dann zu einem im Vergleich zum Temperaturanstieg in der Dämmschicht relativ geringen Temperaturanstieg an der Außenseite der Wand führt, dessen gegebenenfalls unerwünschte Heizwirkung im Sommer überdies durch wärmedämmende Ausbildung der Wand selbst gut begrenzt werden kann.

In jedem Fall sollte jedoch der Transmissionsgrad $\tau$ der Dämmschicht gering gehalten werden und jedenfalls nicht wesentlich über 10 % liegen. Da die Opazitätsschichtdicke bei üblichen Mineralfaserdämmstoffen zwischen etwa 35 und 80 mm liegt und somit bei einer Schichtdicke von 25 mm auch in ungünstigen Fällen bereits ein Transmissionsgrad $\tau$ von 10 % erzielt wird, ergeben sich insoweit keine praktischen Schwierigkeiten, da regelmäßig mit Dämmschichtdicken über 25 mm gearbeitet werden wird. Allenfalls bei anderen Dämmaterialien, die hochdämmend sind und daher in sehr geringen Schichtdicken verarbeitet werden, müßte bei sich dadurch ergebendem höherem Transmissionsgrad besonderer Wert auf eine besonders gute Absorption gelegt werden. Hier könnte sich die Verwendung von Trübungsmitteln in Dämmaterial empfehlen, welche den Transmissionsgrad $\tau$ bei Solareinstrahlung drastisch erhöhen und dabei gegebenenfalls auch selbst verstärkt absorbieren und so zugleich den Absorptionsgrad $\alpha$ verbessern.

Bei diesen Ausgangsbedingungen stellt sich im Falle des gelben Faservlieses ein Temperaturmaximum in ca. 20 mm Strahlungseindringtiefe ein.

Im weißen Fasermaterial liegt dieses bei ca. 15 mm Dicke. Eine Strahlungsintensität von nahezu 700 W/m$^2$ vor der Wand führt im gelben Faservlies zu einem Maximalwert von ca. 43°C und beim weißen Material zu 36°C. Bei Sonneneinstrahlung ist ein Wärmeabfluß von innen nach außen dadurch blockiert.

Im transparenten Dämmaterial nach dem Stand der Technik findet nur eine minimale Strahlungsabsorption statt. Hier überwiegen die Transmissionsverluste durch Strahlungsrückstreuung. Bei 50 mm Schichtdicke werden noch nahezu 40 % der auftreffenden Solarstrahlungen transmittiert, die hinter der Dämmschicht an der Oberfläche der inneren Wandschale absorbiert werden. Bei dieser Dämmschicht tritt daher das Temperaturmaximum an der Außenoberfläche der inneren Wandschale (Absorptionsschicht) auf. Im angegebenen Beispiel beträgt die Wandoberflächentemperatur 45°C. Die opake Außenbekleidung der Referenzwand erwärmt sich auf ca. 31°C bei einer Außenlufttemperatur von 12,4°C.

Tabelle 4 enthält die in den einzelnen Monaten an der oberfläche der Außenbekleidung gemessenen Maximalwerte. Sie liegen bei der opaken Aluminiumbekleidung stets am höchsten mit Spitzenwerten nahe 50°C und beim transparenten gedämmten Feld stets am niedrigsten (Maximalwerte um 37°C bei einem Außenlufttemperaturmaximum von 36°C). Die an der Außenoberfläche der inneren Wandschale unter der Dämmschicht ermittelten maximalen und mittleren Werte sind ebenfalls in Tabelle 4 angegeben. Hier werden bei der Referenzwand die niedrigsten Werte um 25°C und bei der transparenten gedämmten Wand die höchsten Werte (über 50°C) festgestellt.

Bei den beiden Versuchsfeldern II "opak" und III "transluzent" liegen die Spitzenwerte bei 28°C bzw. 26°C. Dies belegt eindeutig, daß bei den erfindungsgemäßen Fassadenbekleidungen im Gegensatz zu denjenigen nach dem Stand der Technik zum einen eine verbesserte Dämmwirkung erzielt und zum anderen aber kein separater Sonnenschutz im Sommer erforderlich ist.

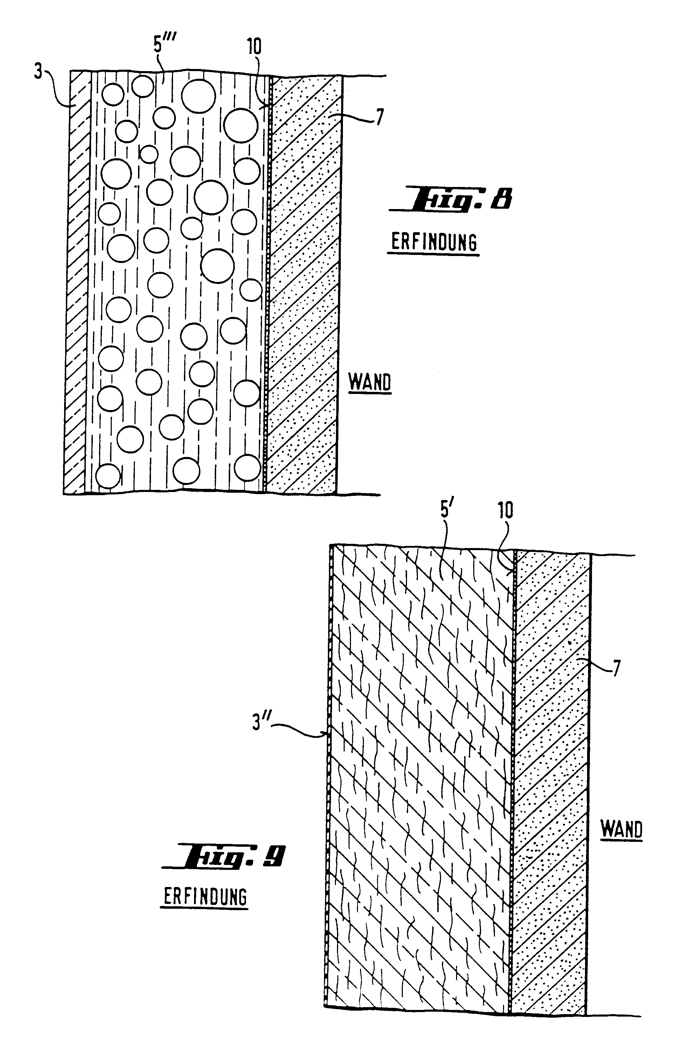

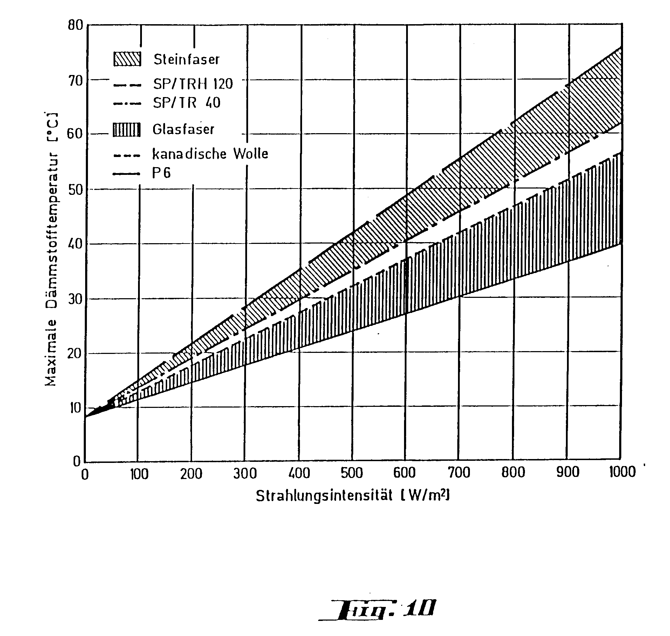

Die erzielbaren Verhältnisse sind dabei in den Fig. 4 bis 6 graphisch dargestellt, wobei Fig. 4 das Funktionsschema bei Verwendung der vorbekannten Fassadenbekleidung (I) mit opaker Außenabdeckung 3', Fig. 5 die Verwendung einer bekannten Fassadenbekleidung (IV) mit zwar transparenter Außenabdeckung 3, aber auch tranparenter Dämmschicht 5'' und Fig. 6 das Funktionsschema bei Verwendung einer erfindungsgemäßen Fassadenbekleidung (II oder III) wiedergibt. Daraus ist nochmals ersichtlich, daß bei der mit "Referenz" gekennzeichneten Fassadenbekleidung (I) nur ein minimaler Wärmegewinn erzielbar ist, und bei der als "transparent" gekennzeichneten bekannten Fassadenbekleidung (IV) der Wärmegewinn zu groß ist, weshalb der erwähnte zusätzliche Sonnenschutz auf jeden Fall notwendig ist. Allein bei den erfindungsgemäßen Fassadenbekleidungen (II + III) läßt sich ein optimaler Wärmegewinn erzielen, ohne daß ein Sonnenschutz notwendig ist.

Bei der Ausführungsform gemäß Fig. 8 ist als Material für die dortige Dämmschicht 5''' ein strukturbedingt poröses Material veranschaulicht, beispielsweise ein luftporen- oder luftblasenhaltiges Material. Entsprechend kommt als Material auch ein geschlossen- oder offenzelliger Schaumkunststoff in Frage.

Bei der Ausführungsform gemäß Fig. 9 ist als Außenabdeckung 3'' eine Folie veranschaulicht, die als Witterungsschicht dient und im Beispielsfalle transparent ist; es kommt eine Kunststoffolie wie eine PE-Folie oder, wenn die Außenabdeckung 3'' diffusionsoffener sein soll, eine PVC-Folie in Betracht.

Abschließend wird noch auf Tabelle 3 und Fig. 7 verwiesen, in der die Monatsmittelwerte der sich ergebenden effektiven k-Werte im Vergleich mit den k-Werten der Wandkonstruktion für den Versuchszeitraum angegeben sind. Der effektive k-Wert ergibt sich dazu:

$$k_{eff} = k\,(1 - S) \qquad (1)$$

In der vorstehenden Gleichung (1) ist mit $k_{eff}$ der real vorliegende effektive Wärmedurchgangskoeffizient der Wandkonstruktion in (W/m$^2$K) bezeichnet. Dieser ist gegenüber dem normalen k-Wert der Wandkonstruktion um den Solarenergiegewinnungsfaktor S reduziert. Dieser Faktor kann material-, anuendungs- und klimaabhängig größer als 1 sein. Das bedeutet, daß der effektive k-Wert einer solchen Konstruktion kleiner als 0 werden und somit sogar negative Werte annehmen kann. Eine solche Wandkonstruktion wirkt dann zeitweilig als Heizsytem. Da diese Wirkung nicht wesentlich von der Dämmschichtdicke abhängt, und da ab einer bestimmten Dämmschichtdicke sogar mit einer weiteren Dickenzunahme eine Abnahme der effektiven Dämmwirkung zu erwarten ist, bedeutet dies eine optimale Dämmwirkung bei geringem Dämmstoffeinsatz.

Volkswirtschaftlich bedeutet dies einen geringen Einsatz an Material und Energie, um eine größere Heizenergieeinsparung zu erzielen. Diese Vorteile lassen sich dabei vor allem so erzielen, daß bei starker Solareinstrahlung, wie vor allem in den Sommermonaten, kein zusätzlicher Sonnenschutz erforderlich ist, so daß sich insgesamt über den gesamten Jahreszeitraum eine optimale Dämmwirkung bei geringem Einsatz an Material und Energie erzielen läßt.

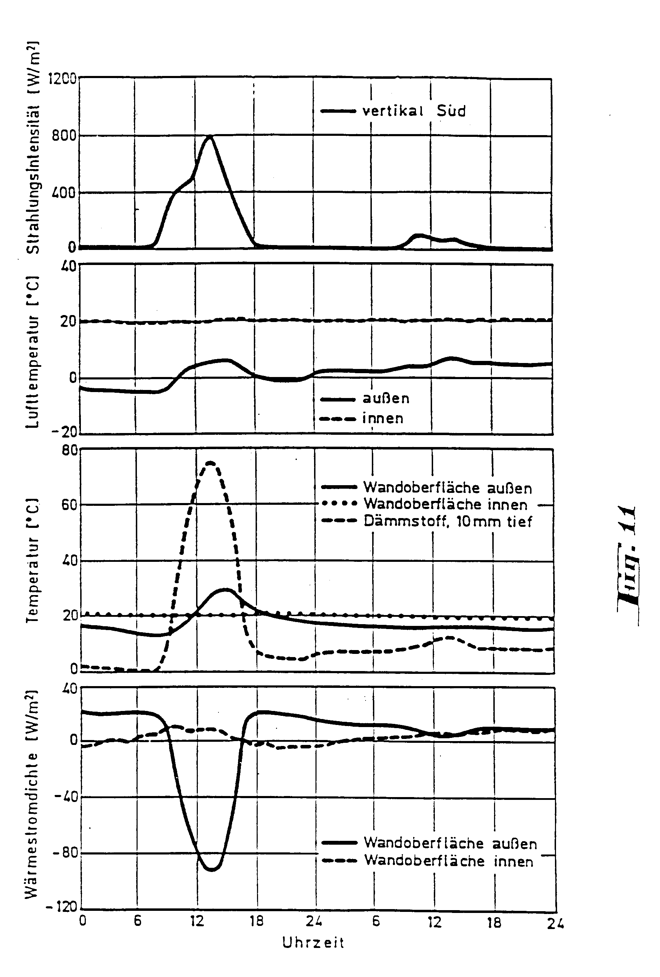

An einem zweitägigen Meßbeispiel ist in Fig. 11 das thermische und energetische Verhalten einer transparent bekleideten Faserdämmschicht prinzipiell aufgezeigt. In den beiden oberen Diagrammen in Fig. 11 sind die klimatischen Randbedingungen zweier Wintertage, einem strahlungsreichen, gefolgt von einem stark bedeckten Tag, angegeben. Am ersten, dem strahlungsreichen Tag, werden in den frühen Nachmittagsstunden an der vertikalen Südfläche Strahlungsintensitäten bis ca. 800 W/m$^2$ erreicht. Die diffuse Strahlung am folgenden, bedeckten Tag weist nur noch Intensitäten unter 100 W/m$^2$ auf. Im Außenlufttemperaturgang treten in den Nachtstunden des ersten Tages Temperaturen unter dem Gefrierpunkt bis -6°C auf, die in den Mittagsstunden auf ca. 6°C ansteigen. Am bedeckten Tag ist im Tagesverlauf nur eine geringe Schwankung zwischen 2 und 7°C feststellbar. Die innen an die Wandkonstruktion grenzende Luft wird während der Heizzeit auf 20°C temperiert. Die höchsten Temperaturen in der Wandkonstruktion treten im äußeren Bereich der Dämmschicht zwischen 5 und 15 mm Tiefe, bezogen auf die äußere Dämmschichtoberflache, auf. Im dritten Diagramm in Fig. 11 ist der Verlauf der Temperatur im Dammstoff in 10 mm Tiefe im Vergleich mit den Oberflächentemperaturen der Wand außen unter der Dammschicht und innen dargestellt.

Die durch die transparente Witterungsschutzbekleidung in den Dämmstoff eindringende Solarstrahlung wird im äußeren Bereich der Dämmschicht absorbiert. Mit dem Auftreten der Sonneneinstrahlung steigt die Temperatur im Dämmstoff an und erreicht beim Strahlungsintensitätsmaximum Spitzenwerte von nahezu 80°C. Durch die geringe Masse der Dämmschicht ist bei der Aufheizung mit zunehmender Strahlungsintensität keine merkliche Zeitverzögerung im Auftreten der Maximaltemperatur feststellbar. Die noch durch die Dämmschicht transmittierte kurswellige Strahlung und Wärmeeinleitung durch die erhöhte Dämmstofftemperatur führen zu einem allmählichen Anstieg der Temperatur an der äußeren Wandoberfläche. Die Wand wird in diesem Bereich etwas erwärmt und kühlt nach dem Ende der solaren Einstrahlung in den Abend- und Nachtstunden wieder ab. Durch die Dämpfung der Temperaturamplitude in der Wand ist an der Innenoberfläche von den Temperaturschankungen im Außenbereich nur sehr wenig festzustellen. Dies zeigt sich auch in den Wärmestromdichten, die im unteren Diagramm in Fig. 11 für die innere und äußere Wandoberfläche angegeben sind. An der Außenoberfläche kehrt sich kurz nach Beginn der solaren Einstrahlung der Wärmestrom um: Es fließt Wärme in die Wand, die als Wärmespeicher im Außenbereich aufgeladen wird. An der raumseitigen Wandoberfläche treten nahezu keine Wärmebewegungen auf.

Mineralfaserdämmstoffe eignen sich besonders für die Bildung der Dämmschicht, die erfindungsgemäß hinter einer transparenten Außenendabdeckung wie einer Glasscheibe angeordnet ist, und sind daher noch näher untersucht worden.

An einer Auswahl von marktüblichen Faserdämmstoffen, die sich in der Art, im Bindemittelgehalt, im Fasergefüge und im Faserdurchmesser unterscheiden, ist durch Messung der örtlichen Erwärmung in Dämmschichten bei natürlicher Bestrahlung an der Sonne der Einfluß der Materialparameter in Abhängigkeit vom Außenklima ermittelt worden.

An neun verschiedenen Materialproben mit den Abmessungen 40 cm x 40 cm wurde die örtliche Erwärmung in Abhängigkeit vom Außenklima gemessen.

Tabelle 5 gibt eine Übersicht der untersuchten Dämmstoffe mit Angabe verschiedener Materialparameter und Materialkennzeichnungen. Untersucht wurden Glas- und Steinfasermaterialien, die durch ihre gelbe und rosa bzw. braune Farbe unterschieden werden können. Die Materialschichtdicken liegen zwischen 20 mm und 120 mm und die Rohdichten der Materialien zwischen 15 und 180 kg/m$^3$. Der Bindemittelgehalt liegt zwischen 1,8 und 7,8 %. Aus der Häufigkeitsverteilung der Faserdurchmesser ergeben sich mittlere Faserdurchmesser zwischen 3,8 und 8`4 µm. Für die Glasfaserproben liegt der Faserfeinheitsindex zwischen 2,9 und 3,4 Micronaire und für das Steinfasermaterial zwischen 111 und 181 Fasonaire.

Für alle Meßproben wird aus den zahlreichen Einzelmeßwerten bei quasi-stationären klimatischen Randbedingungen bei jeweils gleicher Außenlufttemperatur der Einfluß der Strahlungsintensität auf die Erwärmung in der Dämmschicht und bei gleicher Strahlungsintensität der Einfluß der Umgebungslufttemperatur ermittelt. Aus dem Vergleich der verschiedenen Materialien bei jeweils gleichen klimatischen Randbedingungen ist der Einfluß der Materialparameter erkenntlich.

In Fig. 10 sind die maximalen Dämmstofftemperaturen der verschiedenen Materialien in Abhängigkeit von der Bestrahlungsstärke bei Außenlufttemperaturen um 8°C angegeben. Mit zunehmender Strahlungsintensität ist bei allen untersuchten Proben eine lineare Zunahme der maximalen Temperatur in der Dämmschicht feststellbar:

$$\vartheta_{max} = \vartheta_o + m \times E_o . \qquad (2)$$

Dabei bedeuten $\vartheta_{max}$ die maximale Temperatur im Dämmstoffmaterial in °C, $\vartheta_o$ die Temperatur an der Außenoberfläche der Dämmschicht in °C, $E_o$ die an der Außenoberfläche der Dämmstoffschicht auftreffende Strahlungsintensität und m einen "Gegenheizungskoeffizienten", der materialtypisch ist.

Wie Tabelle 6 veranschaulicht, beträgt der für die Zunahme der Maximaltemperatur beim jeweiligen Material charakteristische, als Gegenheizungskoeffizient bezeichnete Faktor m beim Material P 6 z.B. 0,032 m²K/W. Dies ist bei den untersuchten Materialien der niedrigste Wert. Der höchste Wert liegt mit 0,075 m²K/W für das Material SP/TRH 120 mehr als doppelt so hoch. Das bedeutet, daß bei 8°C Außenlufttemperatur im 50 mm dicken Material SP/TRH 120 bereits Strahlungsintensitäten unter 200 W/m² zu einer Erwärmung des Dämmstoffes über Raumlufttemperaturniveau von 20°C führen, beim Material P 6 hierfür jedoch Bestrahlungsstärken von ca. 400 W/m² erforderlich sind. Bei den verschiedenen Steinfasermaterialien liegen die Temperaturerhöhungskoeffizienten zwischen 0,047 und 0,075 m²K/W und bei den Glasfasermaterialien zwischen 0,032 und 0,047 m²K/W. Mit Werten zwischen 5,7 bis 8,4 für die mittleren Faserdurchmesser liegen beim Steinfasermaterial die Werte höher als beim Glasfasermaterial, wo mittlere Durchmesser zwischen 3,8 und 4,8 µm festgestellt wurden. Bei 1000 W/m² Bestrahlungsstärke liegen die Maximaltemperaturen bei einer Schichtdicke von 50 mm bei demjenigen Material, das die höchsten Temperaturen erreicht, bei einer Umgebungslufttemperatur von 8°C unter 80°C.

Der Umgebungstemperatureinfluß auf die maximale Erwärmung der Dämmschicht bei gegebener Strahlungsintensität ist durch eine nichtlineare Abhängigkeit gekennzeichnet. Allerdings ist im praxisrelevanten Außenlufttemperaturbereich zwischen -5°C und 20°C eine Linearisierung möglich, so daß Gleichung (2) den Außenlufttemperatureinfluß mit ausreichender Genauigkeit beschreibt.

Die Glasfasermaterialien weisen bei Rohdichten zwischen 10 und 60 kg/m³ keine großen Unterschiede in den mittleren Faserdurchmessern auf. Die Probe mit dem niedrigsten Faserfeinheitsindex, also mit dem dichtesten Gefüge, erreicht bei gleichen klimatischen Randbedingungen die höchsten Maximaltemperaturen im Dämmstoff. Beim Material mit der höchsten Rohdichte, P 6, werden die niedrigsten Werte festgestellt. Bei den Steinfasermaterialien ist bezüglich des Fasergefüges ein analoges Verhalten feststellbar. Nahezu gleiche Rohdichte und Schichtdicke bei den Materialien SP/TRH 40 und ISE-B 1, aber unterschiedliche Faserfeinheit, wirkt sich so aus, daß bei niedrigerem Fasonairewert die höheren Maximaltemperaturen erzielt werden. Allerdings werden hier bei höherer Dichte und dickeren Materialschichten höhere Maximaltemperaturen erzielt.

Beim dunkleren Steinfasermaterial, das auch höhere Faserdurchmesser aufweist, stellen sich höhere Maximaltemperaturen im Dämmstoff ein. Das Glasfasermaterial P 6 zeigt bei der größten Rohdichte und dem größten Faserfeinheitsindex die geringste Erwärmung. Das Steinfasermaterial SP/TRH 120 hat mit nahezu gleicher Faserfeinheit, aber wesentlich höherer Rohdichte die höchsten Maximaltemperaturen. Bei nahezu gleicher Rohdichte der Materialproben ISE-B 1 und SP/TRH 40 werden bei ersteren mit dem wesentlich geringeren Fasonairewert höhere Maximaltemperaturen erreicht.

Die durch Absorption der in die Faserdämmstoffe eindringenden Solarstrahlung entstehende Erwärmung kann in guter Näherung durch einen materialcharakteristischen Kennwert, multiplikativ mit der jeweiligen Strahlungsintensität, berechnet und zur jeweiligen Umgebungslufttemperatur addiert werden. Bei den untersuchten Materialien liegen diese "Gegenheizungskoeffizienten" m zwischen ca. 0,03 und 0,08 m²K/W, d.h. daß bei 100 W/m² Bestrahlungsstärke eine Gegenheizung um bis zu 8 K und bei 1000 W/m² bis 80 K stattfindet. Im Vergleich von Glas- und Steinfasermaterialien treten bei letzteren die höheren Maximaltemperaturen in der Faserdämmschicht auf. Ob dies überwiegend auf die unterschiedlichen Faserdurchmesser oder auch auf die Farbunterschiede zurückzuführen ist, kann aus den geschilderten Untersuchungen nicht abschließend festgestellt werden. Tendenziell werden bei dichteren Gefügen höhere Maximaltemperaturen erzielt. Ein gegebenenfalls erheblicher Einfluß des Faserdurchmessers auf das Absorptionsverhalten wird jedoch bereits aufgrund im Rahmen der Erfindung beobachteter Resonanzerscheinungen zwischen Fasern bestimmter Dicke und Strahlung mit Wellenlängen im Bereich des Faserdurchmessers erwartet. Danach ist verstärkte Absorption an Fasern zu erwarten, deren Durchmesser im Bereich der Wellenlänge der zu absorbierenden Strahlung liegt oder mit dieser in einem annähernd ganzzahligen Verhältnis steht.

Der "Gegenheizungskoeffizient" m ist nicht generell zu maximieren, sondern klima- und anwendungsabhängig zu wählen. Für deutsche Verhältnisse geeignete Werte liegen etwa bei 0,01 bis 0,07 in wärmeren Gegenden wie etwa Freiburg, und bei 0,05 bis 0,10 für kühlere Gegenden mit weniger Sonneneinstrahlung wie etwa Hamburg. Im ersteren Fall kann beispielsweise bevorzugt mit Glaswollefasern mit Rohdichten zwischen 10 und 30 kg/m³ und Faserdurchmessern zwischen 2 und 30 µm bei Dämmdicken zwischen 20 und 120 mm gearbeitet werden, während im letzteren Fall Steinwollefasern - gegebenenfalls in Form sog. Lamellenplatten mit quer zur Plattenhauptrichtung orientierten Faser - mit Rohdichten über 40 kg/m³ und Faserdurchmessern zwischen 4 und 30 µm bei Dämmdicken zwischen 30 und 120 mm geeigneter erscheinen.

| Wand-element Nr. | Aufbau der Dämmschale | Außenbekleidung | | | Dämmschicht | | | | Benennung |
|---|---|---|---|---|---|---|---|---|---|
| | | Material | Dicke [mm] | Wärmeleit-fähigkeit [W/mk] | Material (Filz) [mm] | Einbaudicke [mm] | Rohdichte [kg/m³] | Wärmeleit-fähigkeit [W/mk] | |
| I | Außenbekleidung opak, Dämmschicht opak | Aluminium | 1 | 180 | gelb | 50 | 14 | 0,04 | Referenz a |
| II | Außenbekleidung transparent, Dämmschicht opak | Glas | 5 | 0,8 | gelb | 50 | 14 | 0,04 | opak b |
| III | Außenbekleidung transparent, Dämmschicht transluzent | Glas | 5 | 0,8 | weiß | 50 | 12,5 | 0,03 | transluzent c |
| IV | Außenbekleidung transparent, Dämmschicht transparent | Glas | 5 | 0,8 | trans-parent | 50 | 4,7 | 0,08 | transparent d |

Tabelle 1: Übersicht der untersuchten Dämmschichten mit Angabe der Stoffwerte

| Meßperiode | Außenlufttemperatur [°C] | | | Strahlungsintensität Süd | | gradtagspezifische | mittlere Tagessummen der |
|---|---|---|---|---|---|---|---|
| 1986 | minimal | mittel | maximal | maximal [W/m²] | mittel [W/m²] | Einstrahlung [kWh/m²Kd] | Gesamtstrahlung Süd [kWh/m²d] |
| April | - 6,4 | 7,9 | 25,3 | 793 | 72,1 | 0,14 | 1,73 |
| Mai | 5,5 | 16,2 | 34,6 | 743 | 90,8 | 0,57 | 2,18 |
| Juni | 5,4 | 18,0 | 35,8 | 619 | 94,1 | 1,13 | 2,26 |
| Juli | 6,6 | 19,3 | 36,3 | 621 | 101,0 | 3,47 | 2,43 |

Tabelle 2: Klimatische Randbedingungen der Messungen

EP 0 362 242 B1

| Wandelement | | Aufbau der Dämmschale | Gesamt-k-Wert | effektive k-Werte [W/m²K] | | | |
|---|---|---|---|---|---|---|---|
| Nr. | Benennung | | [W/m²K] | April | Mai | Juni | Juli |
| I | Referenz | Außenbekleidung opak, Dämmschicht opak | 0,62 | 0,43 | 0,24 | 0,02 | -0,44 |
| II | opak | Außenbekleidung transparent, Dämmschicht opak | 0,62 | 0,28 | -0,44 | -1,02 | -2,6 |
| III | transluzent | Außenbekleidung transparent Dämmschicht transluzent | 0,60 | 0,33 | 0,01 | -0,23 | -0,83 |
| IV | transparent | Außenbekleidung transparent Dämmschicht transparent | 1,24 | -0,46 | -2,91 | -4,78 | -8,31 |

Tabelle 3: Monatsmittelwerte der effektiven k-Werte der vier Wandkonstruktionen mit unterschiedlicher Dämmung

| Wandelement | | Aufbau der Dämmschale | Temperatur der Dämmschale [°C] | | | | | | | | | | | |
|---|---|---|---|---|---|---|---|---|---|---|---|---|---|---|
| | | | April | | | Mai | | | Juni | | | Juli | | |
| Nr. | Benennung | | außen maximal | innen maximal | mittel | außen maximal | innen maximal | mittel | außen maximal | innen maximal | mittel | außen maximal | innen maximal | mittel |
| I | Referenz | Außenbekleidung opak, Dämmschicht opak | 44,4 | 22,9 | 18,1 | 46,1 | 24,2 | 20,4 | 48,2 | 25,2 | 20,8 | 46,7 | 25,1 | 21,1 |
| II | opak | Außenbekleidung transparent, Dämmschicht opak | 32,7 | 28,2 | 19,5 | 37,0 | 28,3 | 21,3 | 38,9 | 28,1 | 21,6 | 39,0 | 28,7 | 21,9 |
| III | trans- luzent | Außenbekleidung transparent, Dämmschicht transluzent | 31,4 | 25,6 | 19,4 | 35,1 | 25,7 | 21,1 | 37,5 | 26,3 | 21,4 | 38,0 | 25,6 | 21,7 |
| IV | trans- parent | Außenbekleidung transparent, Dämmschicht transparent | 27,3 | 50,9 | 20,4 | 34,3 | 49,1 | 24,3 | 36,9 | 44,0 | 24,7 | 37,4 | 47,1 | 26,6 |

Tabelle 4: Maximale Temperaturen an der äußeren Oberfläche der Außenbekleidung sowie maximale und mittlere Temperaturen an der inneren Oberfläche der Dämmschicht in den vier Wandelementen (April bis Juli 1986)

EP 0 362 242 B1

Tabelle 5: Übersicht der Versuchsmaterialien mit Angabe von Kennwerten

| Nr. | Probenmaterial | Farbe | Kenn-zeich-nung | Schicht-dicke [mm] | Roh-dichte [kg/m³] | Flächen-gewicht [g/m²] | mittlerer Faser-durchmesser [µm] | Faser-feinheits-index | Binde-mittel-gehalt [%] |
|---|---|---|---|---|---|---|---|---|---|
| 1 | Filz 320 | gelb | Glasfaser | 80 | 20 | 1600 | 3,9 | 2,9 1) | 5,8 |
| 2 | FT | gelb | Glasfaser | 50 | 15 | 750 | 3,8 | 3,0 | 6,4 |
| 3 | P 6 | gelb | Glasfaser | 60 | 60 | 3600 | 4,4 | 3,4 | 7,8 |
| 4 | kanad. Wolle | rosa | Glasfaser | 120 | 10 | 1200 | 4,0 | 3,2 | 3,3 |
| 5 | SP/TRH 50 | braun | Steinfaser | 100 | 50 | 5000 | 6,3 | 167 2) | 1,8 |
| 6 | SP/TRH 120 | braun | Steinfaser | 50 | 120 | 6000 | 5,9 | 153 | 3,9 |
| 7 | SP/TR 180 | braun | Steinfaser | 30 | 180 | 5400 | 5,7 | 176 | 1,9 |
| 8 | SP/TR 40 | braun | Steinfaser | 20 | 40 | 800 | 4,8 | 181 | 3,8 |
| 9 | ISE-B 1 | braun | Steinfaser | 30 | 45 | 1350 | 8,4 | 111 | 2,0 |

1) Micronairewert          2) Fasonairewert

EP 0 362 242 B1

Tabelle 6 : "Gegenheizungseffekt" der untersuchten Fasermaterialien

| Nr. | Probenmaterial | Kennzeichnung | Gegenheizungskoeffizient [m² K/W] |
|---|---|---|---|
| 1 | Filz 320 | Glas- | 0,047 |
| 2 | FT | | 0,040 |
| 3 | P 6 | faser | 0,032 |
| 4 | kanadische Wolle | | 0,048 |
| 5 | SP/TRH 50 | Stein- | 0,052 |
| 6 | SP/TRH 120 | | 0,075 |
| 7 | SP/TR 180 | faser | 0,057 |
| 8 | SP/TR 40 | | 0,047 |
| 9 | ISE-B 1 | | 0,058 |

**Patentansprüche**

1. Fassadenbekleidung mit einer Dämmschicht (5) aus Wärmedämmstoff mit einem an der Außenseite vorgesehenen lichtdurchlässigen Witterungsschutz in Form einer Außenabdeckung (3), dadurch ge-

14

# EP 0 362 242 B1

kennzeichnet, daß die Dämmschicht (5) zur Erzielung eines Temperaturprofiles bei nutzbarer Sonneneinstrahlung mit einem maximalen Wert innerhalb der Dämmschicht (5) zwischen deren äußerer und innerer Begrenzungsfläche opak oder transluzent mit einem Transmissionsgrad $\tau$ von weniger als 10% und einem Absorptionsgrad $\alpha$ von mehr als 15% ausgebildet ist.

2. Fassadenbekleidung nach Anspruch 1, dadurch gekennzeichnet, daß die Dämmschicht (5) eine struktur- und/oder materialbedingte Porosität aufweist.

3. Fassadenbekleidung nach Anspruch 1 oder 2, dadurch gekennzeichnet, daß die Dämmschicht (5) aus anorganischen Fasermaterialien bzw. -dämmplattenmaterialien besteht.

4. Fassadenbekleidung nach einem der Ansprüche 1 bis 3, dadurch gekennzeichnet, daß die Dämmschicht organische Fasermaterialien, insbesondere Kokosfasern, Flachs und/oder Holzspäne umfaßt.

5. Fassadenbekleidung nach einem der Ansprüche 1 bis 4, dadurch gekennzeichnet, daß die Dämmschicht (5) organische und/oder anorganische Poren- oder Schaummaterialien umfaßt.

6. Fassadenbekleidung nach einem der Ansprüche 1 bis 5, dadurch gekennzeichnet, daß die Außenabdeckung (3) eine transluzente, milchglasähnliche Schicht aufweist.

7. Fassadenbekleidung nach einem der Ansprüche 1 bis 6, dadurch gekennzeichnet, daß die Außenabdeckung (3) eine Folienabdeckung aufweist.

8. Fassadenbekleidung nach einem der Ansprüche 1 bis 7, dadurch gekennzeichnet, daß die Außenabdeckung (3) eine Textilgewebeabdeckung aufweist.


## Claims

1. Cladding for outside walls comprising an insulating layer (5) of thermally insulating material with a transparent protection against atmospheric influences in the form of an external cover (3) provided on its outer side, characterised in that said insulating layer (5) is designed to be opaque or translucent at a transmission ratio $\tau$ of less than 10% and an absorption ratio $\alpha$ of more than 15% between its outer and inner limiting surfaces, in order to achieve a temperature profile with a maximum value inside said insulating layer (5) at usable incident sunlight.

2. Cladding according to claim 1, characterised in that said insulating layer (5) presents a porosity which is founded in its structure and/or material.

3. Cladding according to claim 1 or 2, characterised in that said insulating layer (5) consists of inorganic fibrous materials or inorganic, fibrous insulating panel materials.

4. Cladding according to one of claims 1 through 3, characterised in that said insulating layer comprises organic fiber materials, in particular coco fibers, flax and/or wood shavings.

5. Cladding according to one of claims 1 through 4, characterised in that said insulating layer (5) comprises organic and/or inorganic porous or foamed materials.

6. Cladding according to one of claims 1 through 5, characterised in that said outer cover (3) comprises a translucent layer resembling frosted glass.

7. Cladding according to one of claims 1 through 6, characterised in that said outer cover (3) comprises a foil cover.

8. Cladding according to one of claims 1 through 7, characterised in that said outer cover (3) comprises a woven textile cover.

15

**Revendications**

1. Revêtement de façades comprenant une couche isolante (5) en un matériau isolant thermique avec une protection transparente contre les influences atmosphériques ayant la forme d'une couverture extérieure (3) pourvue sur son côté extérieur, caractérisé en ce que cette couche isolante (5) est formée de manière à être opaque ou translucide avec un taux de transmission $\tau$ inférieur à 10% et un facteur d'absorption $\alpha$ supérieur à 15% pour achever, à l'ensoleillement utile, un profile des températures présentant un maximum à l'intérieur de cette couche isolante (5) entre ses surfaces délimitantes extérieure et intérieure.

2. Revêtement selon la revendication 1, caractérisé en ce que la couche isolante (5) présente une porosité imposée par sa structure et/ou le matériau la constituant.

3. Revêtement selon l'une des revendications 1 or 2, caractérisé en ce que la couche isolante (5) est constituée de matériaux organiques fibreux ou de matériaux inorganiques fibreux pour panneaux isolants.

4. Revêtement selon l'une des revendications 1 à 3, caractérisé en ce que la couche isolante comprend des matériaux fibreux organiques, notamment des fibres de coco, du lin, et/ou des particules de bois.

5. Revêtement selon l'une des revendications 1 à 4, caractérisé en ce que la couche isolante (5) comprend des matériaux organiques et/ou inorganiques poreux ou moussés.

6. Revêtement selon l'une des revendications 1 à 5, caractérisé en ce que la couverture extérieure (3) comprend une couche translucide à l'aspect de verre opale.

7. Revêtement selon l'une des revendications 1 à 6, caractérisé en ce que la couverture extérieure (3) comprend une couverture constitué d'une feuille.

8. Revêtement selon l'une des revendications 1 à 7, caractérisé en ce que la couverture extérieure (3) comprend une couverture en tissu textile.

*Fig. 1*

ERFINDUNG

WAND

*Fig. 2*

ERFINDUNG

WAND

*Fig. 3*

TRANSPARENT (d)

OPAK (b)
TRANSLUZENT (c)
REFERENZ (a)

## _Fig. 4_

STAND DER TECHNIK

GESAMT−
STRAHLUNG

GEWINN

VERLUSTE

WAND

I WÄRMEDÄMMUNG

**Fig. 5**

STAND DER TECHNIK

SOLARE EINSTRAHLUNG

WÄRMEABGABE

GEWINN

REFLEXION

RÜCKSTREUUNG

WAND

IV

**Fig. 6**

ERFINDUNG

SOLARE EINSTRAHLUNG

WAND

WÄRME-ABGABE

GEWINN

REFLEXION

ABSORPTION

II/III

Fig. 7

**Fig. 8**

ERFINDUNG

WAND

**Fig. 9**

ERFINDUNG

WAND

_Fig. 10_

Fig. 11